# EUROPEAN PATENT APPLICATION

(11) **EP 4 180 837 A1**
(43) Date of publication of application: **17.05.2023**
(21) Application number: 22206248.1
(22) Date of filing: 08.11.2022
(51) Int. Cl.: G01S 7/48, G01S 7/487, G01S 17/42, G01S 17/86, G01S 17/89

(54) **REMOVING REFLECTION FROM SCANNED DATA**

(30) Priority: 14.11.2021 US 202163279122 P; 06.09.2022 US 202217903152
(71) Applicant: Faro Technologies, Inc., Lake Mary, FL 32746-6204 (US)
(72) Inventor: WOHLFELD, Denis, 70825 Korntal-Münchingen (DE); BHARDWAJ, Nithin, 70825 Korntal-Münchingen (DE); KRETS, Ilia, 70825 Korntal-Münchingen (DE); BAUER, Heiko, 70825 Korntal-Münchingen (DE)
(74) Representative: Harris, Oliver John Richard

(57) **Abstract**

A system includes a three-dimensional (3D) scanner, a camera, and one or more processors coupled with the 3D scanner and the camera. The processors capture a frame that includes a point cloud comprising plurality of 3D scan points and a 2D image. A 3D scan point represents a distance of a point in a surrounding environment from the 3D scanner. A pixel represents a color of a point in the surrounding environment. The processors identify, using a machine learning model, a subset of pixels that represents a reflective surface in the 2D image. Further, for each pixel in the subset of pixels, one or more corresponding 3D scan points is determined. An updated point cloud is created in the frame by removing the corresponding 3D scan points from the point cloud.

## Description

### CROSS REFERENCE TO RELATED APPLICATIONS

This application claims the benefit of U.S. Provisional Application Serial No. 63/279,122, filed November 14, 2021, the entire disclosure of which is incorporated herein by reference.

### BACKGROUND

The subject matter disclosed herein relates to computing technology, particularly 3D coordinate measurement devices, and more particularly to the removal of reflection(s) from reflective surfaces in data captured by such 3D coordinate measurement devices.

A 3D coordinate measurement device can be a 3D laser scanner or any other 3D scanner device. Typically, a 3D laser scanner, such as a time-of-flight (TOF) laser scanner, steers a beam of light to a non-cooperative target such as a diffusely scattering surface of an object. A distance meter in the device measures a distance to the object, and angular encoders measure the angles of rotation of two axles in the device. The measured distance and two angles enable a processor in the device to determine the 3D coordinates of the target. While a TOF laser scanner is generally used as an example 3D laser scanner when describing technical solutions herein, other types of laser scanners can also be used.

A TOF laser scanner is a scanner in which the distance to a target point is determined based on the speed of light in the air between the scanner and a target point. Laser scanners are typically used for scanning closed or open spaces such as interior areas of buildings, industrial installations, and tunnels. They may be used, for example, in industrial applications and accident reconstruction applications. A laser scanner optically scans and measures objects in a volume around the scanner by acquiring data points representing object surfaces within the volume. Such data points are obtained by transmitting a beam of light onto the objects and collecting the reflected or scattered light to determine the distance, two-angles (i.e., azimuth and a zenith angle), and optionally a gray-scale value. This raw scan data is collected, stored, and sent to one or more processors to generate a 3D image representing the scanned area or object.

Generating an image requires at least three values for each data point. These three values may include the distance and two angles or transformed values, such as the x, y, z coordinates. In an embodiment, an image is also based on a fourth gray-scale value, which is a value related to the irradiance of scattered light returning to the scanner.

Most TOF scanners direct the beam of light within the measurement volume by steering the light with a beam steering mechanism. The beam steering mechanism includes a first motor that steers the beam of light about a first axis by a first angle measured by a first angular encoder (or another angle transducer). The beam steering mechanism also includes a second motor that steers the beam of light about a second axis by a second angle measured by a second angular encoder (or another angle transducer).

Many contemporary laser scanners include a color camera mounted on the laser scanner for gathering digital camera images of the environment and presenting the digital camera images to an operator of the laser scanner. By viewing the digital camera images, the scanner operator can determine the field of view of the measured volume and adjust settings on the laser scanner to measure over a larger or smaller region of space. In addition, the digital camera images may be transmitted to a processor to add color to the scanner image. At least three positional coordinates (such as x, y, z) and three color values (such as red, green, blue "RGB") are collected for each data point to generate a color scanner image.

While existing 3D scanners are suitable for their intended purposes, what is needed is a 3D scanner having certain features of embodiments of the present disclosure.

### BRIEF DESCRIPTION

According to one or more aspects, a system includes a three-dimensional (3D) scanner, a camera, and one or more processors coupled with the 3D scanner and the camera. The one or more processors capture a frame with the 3D scanner and the camera, wherein the frame comprises a point cloud from the 3D scanner and a 2D image from the camera, the point cloud comprises a plurality of 3D scan points, a 3D scan point represents a distance of a point in a surrounding environment from the 3D scanner, and the 2D image comprises a plurality of pixels, a pixel represents a color of a point in the surrounding environment. The one or more processors further identify, using a machine learning model, a subset of pixels in the 2D image, the subset of pixels represents a reflective surface. The one or more processors further, for each pixel in the subset of pixels, determine one or more corresponding 3D scan points in the point cloud. The one or more processors further create an updated point cloud in the frame by removal of the one or more corresponding 3D scan points from the point cloud.

In one or more aspects, the 2D image is an ultra-wide-angle image.

In one or more aspects, the machine learning model comprises a neural network.

In one or more aspects, the neural network uses semantic segmentation to identify the subset of pixels representing the reflective surface.

In one or more aspects, the camera is an integral part of the 3D scanner.

In one or more aspects, the camera is mounted on the 3D scanner at a predetermined position relative to the 3D scanner.

In one or more aspects, the reflective surface is a glass panel.

According to one or more aspects, a computer-implemented method includes accessing, by a processor, a frame captured by a three-dimensional (3D) scanner and a camera, wherein the frame comprises a point cloud from the 3D scanner and a 2D image from the camera, the point cloud comprises a plurality of 3D scan points, a 3D scan point represents a distance of a point in a surrounding environment from the 3D scanner, and the 2D image comprises a plurality of pixels, a pixel represents a color of a point in the surrounding environment. The method further includes identifying, by the processor, using a machine learning model, a subset of pixels in the 2D image, the subset of pixels represents a reflective surface. The method further includes, for each pixel in the subset of pixels, determining, by the processor, one or more corresponding 3D scan points in the point cloud. The method further includes creating by the processor, an updated point cloud in the frame by removal of the one or more corresponding 3D scan points from the point cloud.

In one or more aspects, the 2D image is an ultra-wide-angle image.

In one or more aspects, the machine learning model comprises a neural network.

In one or more aspects, the neural network uses semantic segmentation to identify the subset of pixels representing the reflective surface.

In one or more aspects, the camera is an integral part of the 3D scanner.

In one or more aspects, the camera is mounted on the 3D scanner at a predetermined position relative to the 3D scanner.

In one or more aspects, the reflective surface is a glass panel.

According to one or more aspects, a computer program product comprising a memory device with computer-executable instructions stored thereon, the computer-executable instructions when executed by one or more processors cause the one or more processors to perform a method. The method includes accessing a frame captured by a three-dimensional (3D) scanner and a camera, wherein the frame comprises a point cloud from the 3D scanner and a 2D image from the camera, the point cloud comprises a plurality of 3D scan points, a 3D scan point represents a distance of a point in a surrounding environment from the 3D scanner, and the 2D image comprises a plurality of pixels, a pixel represents a color of a point in the surrounding environment. The method further includes identifying using a machine learning model, a subset of pixels in the 2D image, the subset of pixels represents a reflective surface. The method further includes for each pixel in the subset of pixels, determining one or more corresponding 3D scan points in the point cloud. The method further includes creating an updated point cloud in the frame by removal of the one or more corresponding 3D scan points from the point cloud.

In one or more aspects, the 2D image is an ultra-wide-angle image.

In one or more aspects, the machine learning model comprises a neural network.

In one or more aspects, the camera is an integral part of the 3D scanner.

In one or more aspects, the camera is mounted on the 3D scanner at a predetermined position relative to the 3D scanner.

In one or more aspects, the reflective surface is a glass panel.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a perspective view of a laser scanner according to one or more aspects of the technical solutions described herein;
FIG. 2 is a side view of the laser scanner illustrating a method of measurement according to one or more aspects of the technical solutions described herein;
FIG. 3 illustrates a schematic illustration of the laser scanner of FIG. 1 according to one or more aspects of the technical solutions described herein;
FIG. 5 depicts a point cloud captured according to one or more aspects of the technical solutions described herein;
FIGS. 6, 7, and 8 depict an example scenario of phantom points according to one or more aspects of the technical solutions described herein;
FIG. 9 depicts a flowchart of a method to automatically remove phantom points from a point cloud according to one or more technical solutions described herein;
FIG. 10 depicts a block diagram of a system 1001 according to one or more aspects of the present technical solutions; and
FIG. 11 and FIG. 12 depict, respectively, point clouds and 3D map to which the technical solutions described herein have been applied.

The detailed description explains embodiments of the invention, together with advantages and features, by way of example with reference to the drawings.

### DETAILED DESCRIPTION

Aspects of the technical solutions described herein relate to a system that includes a three-dimensional (3D) measurement device and at least one camera to capture images. The 3D measurement device can be a 3D scanner. The 3D scanner captures a point cloud representing a scene in a field-of-view (FOV) of the 3D scanner. The point cloud is a set of scan points, each scan point being captured from a surface in the scene. The scan points have 3D coordinates representing their location in the scene.

The 3D measurement device further includes a camera that acquires a 2D image of a scene. In some examples, the camera captures a color image using RGB or any other coloring scheme. In an embodiment, the intensity image is generated by the 3D measurement device optical sensor from the returning laser beam of light. The camera can be an integral part of the 3D scanner in some examples. Alternatively, or in addition, the camera can be an external camera (e.g., a panoramic camera) fixed at a known position in relation to the 3D scanner.

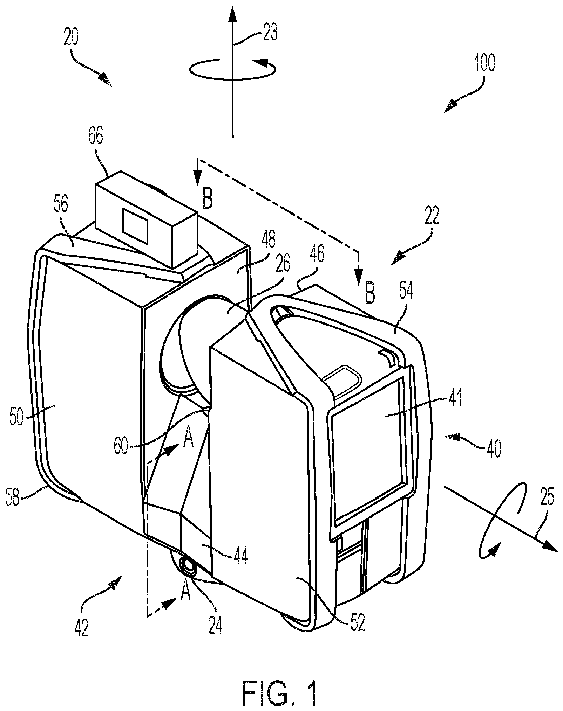

Referring now to FIGS. 1 - 2, a measurement device 100 includes a laser scanner 20 for optically scanning and measuring the environment surrounding the measurement device 100. In one or more aspects, the measurement device 100 can be one of the laser scanners described in U.S. Patent No. 9,074,878. The measurement device 100 further includes a camera 66 to capture color images of the surroundings.

The laser scanner 20 is an example 3D measurement device according to one or more embodiments of the technical solutions described herein. It should be noted that the 3D measurement device can be other types of devices than the laser scanner 20 of FIG. 1. The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms "azimuth axis" and "zenith axis" may be substituted for the terms "vertical axis" and "horizontal axis," respectively. The term pan axis or standing axis may also be used as an alternative to the vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example, 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity-modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions, in turn, depend on the corresponding rotary drives or motors.

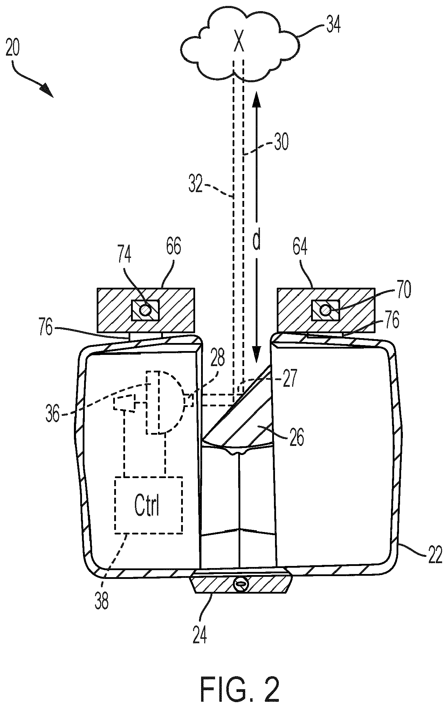

Coupled to the light emitter 28 and the light receiver 36 is a controller 38. The controller 38 determines, for a multitude of measuring points X (FIG. 2), a corresponding number of distances d between the laser scanner 20 and the points X on object 34. The distance to a particular point X is determined based at least in part on the speed of light in air through which electromagnetic radiation propagates from the device to the object point X. In one embodiment, the phase shift of modulation in light emitted by the laser scanner 20 and the point X is determined and evaluated to obtain a measured distance d.

The speed of light in air depends on the properties of the air, such as the air temperature, barometric pressure, relative humidity, and concentration of carbon dioxide. Such air properties influence the index of refraction n of the air. The speed of light in air is equal to the speed of light in vacuum c divided by the index of refraction. In other words, *c*ₐᵢᵣ *= c* / *n.* A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally, and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel along a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in the air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, scanner 20 may also collect gray-scale information related to the received intensity (equivalent to the term "brightness" or "optical power") value. The gray-scale value may be determined at least in part, for example, by integration of the bandpass-filtered and amplified signal in the light receiver 36 over a measuring period attributed to the object point X. As will be discussed in more detail herein, the intensity value may be used to enhance color images that are used to colorize the scanned data.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse member 44 having a pair of walls 46, 48 on opposing ends. The walls 46, 48 are parallel to each other and extend in a direction opposite base 24. Shells 50, 52 are coupled to walls 46, 48 and cover the components of the laser scanner 20. In the exemplary embodiment, shells 50, 52 are made from a plastic material, such as polycarbonate or polyethylene, for example. The shells 50, 52 cooperate with the walls 46, 48 to form a housing for the laser scanner 20.

On the end of the shells 50, 52 opposite the walls 46, 48, a pair of yokes 54, 56 are arranged to cover the respective shells 50, 52 partially. In the exemplary embodiment, the yokes 54, 56 are made from a suitably durable material, such as aluminum, for example, that assists in protecting the shells 50, 52 during transport and operation. The yokes 54, 56 each includes a first arm portion 58 that is coupled, such as with a fastener, for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48, and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52, and the measuring head 22 from damage during transportation and operation. In other embodiments, the yokes 54, 56 may include additional features, such as handles to facilitate the carrying of the laser scanner 20 or attachment points for accessories, for example.

On top of the traverse 44, a prism 60 is provided. The prism extends parallel to the walls 46, 48. In the exemplary embodiment, prism 60 is integrally formed as part of the carrying structure 42. In other embodiments, prism 60 is a separate component that is coupled to the traverse 44. When mirror 26 rotates, during each rotation the mirror 26 directs the emitted light beam 30 onto the traverse 44 and the prism 60. Due to non-linearities in the electronic components, for example, in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point, and optical power (generally unscaled quantity of light power sometimes referred to as "brightness") returned from the measured point and sent to an optical detector in the light receiver 36. Since prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be but is not limited to a pyrometer, a thermal imager, an ionizing radiation detector, or a millimeter-wave detector. In an embodiment, the auxiliary image acquisition device 66 is a color camera. The color camera can be equipped with a lens 74 such as, a rectilinear lens, an ultrawide-angle lens, sometimes referred to as a "fisheye camera," or any other such lens to capture the color information of the one or more surfaces in the volume captured by the laser scanner 20. Herein, the auxiliary image acquisition device 66 is also referred to as a "camera," however, as noted, it can include other types of devices listed above.

In an embodiment, camera 66 is rotated by a motor 138, and the angular/rotational position of camera 66 can be measured by angular encoder 132. Camera 66 obtains 2D images of the scanned area to capture color data to add to the captured point cloud. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering camera 66 about the axis 25.

A sensing device 64 may be a device that captures and measures a parameter associated with the scanned volume or the scanned object and provides a signal representing the measured parameters over image acquisition area 72. The sensing device 64 may be capable of acquiring optical emissions outside the visible range-for example, in the infrared and ultraviolet regions. In these regions, optical components such as lenses and beam splitters may be used. In addition, the sensing device may be capable of measuring millimeter waves, terahertz waves, and x-rays. The sensing device 64 may be a radiation detector having the ability to measure at least one of alpha radiation, beta radiation, and gamma radiation. The sensing device 64 may include an image intensifier used in combination with another sensor to provide brighter images in dark surroundings. In some embodiments, the sensing device 64 includes a single sensor element, while in other embodiments the sensing devices includes an array of sensing elements, that is to say an array detector. In some embodiments, a conditioning element may be provided as a part of the sensing device 64 to condition in incoming emissions. For example, for the case of an optical sensing device 64, the conditioning device may include a lens 70 to provide on the array detector an image of the emissions at the position of the surfaces being measured. In another instance, for example, in the case of an x-ray array detector, the conditioning device may be a pinhole plate 70, designed to serve a function similar to that of a pinhole plate in a pinhole camera. In the case of an x-ray array detector, the material of the pinhole plate 70 may be a dense material such as lead.

The image acquisition device 66 and the sensing device 64 are mounted to the measuring head 22 by a holder or bracket 76. The brackets 76 fix the devices 64, 66 to the measuring head so that the devices 64, 66 may be rotated about the axis 23. In this manner, the devices 64, 66 may acquire several images as the measuring head 22 is rotated about the axis 23 to thus cover the entire angular range. The direction from which the images are taken may be registered by encoders. In one embodiment, the bracket includes a mechanism for relating the attached device.

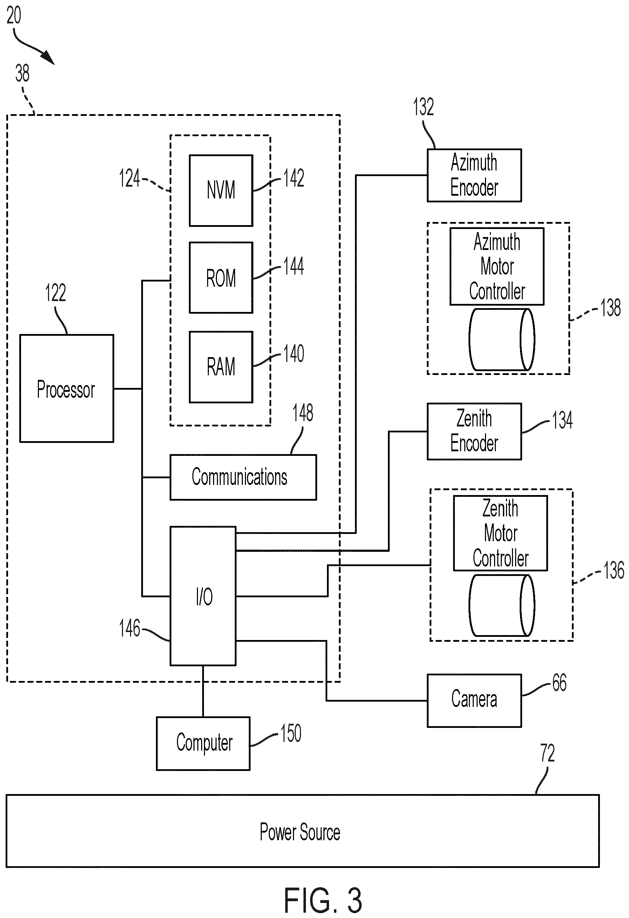

Referring now to FIG. 3 with continuing reference to FIGS. 1-2, elements are shown of the measurement device 100. Controller 38 is a suitable electronic device capable of accepting data and instructions, executing the instructions to process the data, and presenting the results. Controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 can convert the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to distance to an object, images of the environment, images acquired by camera 66, angular/rotational measurements by a first or azimuth encoder 132, and angular/rotational measurements by a second axis or zenith encoder 134.

In general, controller 38 accepts data from encoders 132, 134, the light receiver 36, light source 28, and camera 66 and is given certain instructions for the purpose of generating a 3D point cloud of a scanned environment. Controller 38 provides operating signals to the light source 28, the light receiver 36, camera 66, zenith motor 136, and azimuth motor 138. Controller 38 compares the operational parameters to predetermined variances and, if the predetermined variance is exceeded, generates a signal that alerts an operator to a condition. The data received by controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touchscreen display, or the like. A keypad may also be coupled to the user interface for providing data input to controller 38. In one embodiment, the user interface is arranged or executed on a mobile computing device that is coupled for communication, such as via a wired or wireless communications medium (e.g., Ethernet, serial, USB, Bluetooth^{™}, or WiFi) for example, to the laser scanner 20.

The controller 38 may also be coupled to external computer networks such as a local area network (LAN) and the Internet. A LAN interconnects one or more remote computers, which are configured to communicate with controller 38 using a well-known computer communications protocol such as TCP/IP (Transmission Control Protocol/Internet Protocol), RS-232, ModBus, and the like. Additional systems 20 may also be connected to LAN with the controllers 38 in each of these systems 20 being configured to send and receive data to and from remote computers and other systems 20. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods described herein, which can be embodied in application code. For example, these methods are embodied in computer instructions written to be executed by processors 122, typically in the form of software. The software can be encoded in any language, including, but not limited to, assembly language, VHDL (Verilog Hardware Description Language), VHSIC HDL (Very High-Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (Hypertext Markup Language), Python, Ruby, and any combination or derivative of at least one of the foregoing.

In some embodiments, controller 38 provides the data captured by the measurement device 100, i.e., the point cloud(s) and captured image(s), to a computer 150. The controller 38 communicates with the computer via a wired or wireless network. Computer 150 processes the data that is captured by the measurement device 100, as described herein.

In one or more embodiments, as depicted in FIGS. 1-2, the image acquisition device 66 is coupled to the laser scanner 20. Alternatively, the image acquisition device 66 is part of an assembly, for example, on a stand (e.g., tripod), a movable cart that can be moved manually, semi-autonomously, or autonomously. In some aspects, the entire system 100 can be mounted on a stand or a movable cart.

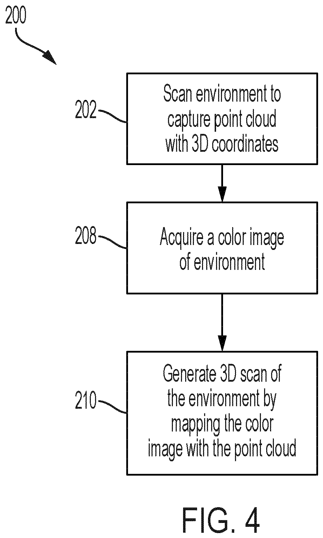

Referring now to FIG. 4, an embodiment of a method 200 is shown for generating a scan of the environment with scanner 20. Method 200 begins in block 202, where the environment in which scanner 20 is positioned is scanned. As described herein, the volume (e.g., the scan area) around the laser scanner 20 is performed by rotating the rotary mirror 26 relatively quickly about axis 25 while rotating the measuring head 22 relatively slowly about axis 23, thereby moving the assembly in a spiral pattern. Thus, for each light beam emitted, a distance value and the angles of the mirror 26 and the measurement head 22 are determined. Thus, a 3D coordinate of a scan point in the environment may be determined for each emitted and received light beam. Further, for each light beam, an intensity value of the returned light beam is measured.

The light beams are emitted and received as the measurement head 22 is rotated 180 degrees about axis 23. Method 200 further includes, at block 208, acquiring color images of the environment. In an embodiment, a 2D color image is acquired by the auxiliary image acquisition device 66. In an embodiment, one or more 2D images are acquired using an ultrawide-angle lens to capture color data in the spherical volume surrounding the laser scanner 20. In an embodiment, 2D acquired color images are in an RGB color model. In other embodiments, other color models, e.g., cyan, magenta, and yellow (CMY), or cyan, magenta, yellow, and black (CMYK), or any other color model, can be used. In yet other embodiments, where an ultrawide-angle lens is not used, much more 2D images are acquired to capture the color data in the spherical volume surrounding the laser scanner 20.

Once the color data is acquired, method 200 includes, at block 210, generating a colorized 3D scan by mapping the 2D coordinates in the image(s) captured by camera 66 with the 3D coordinates in the point cloud captured by scanner 20. The mapping can be performed using any known technique. In this manner, a "scan" includes a point cloud and a corresponding image. The corresponding image is a panorama (ultra-wide angle) image in one or more aspects.

In one or more embodiments, the auxiliary image acquisition device 66 can be an omnidirectional camera such as a RICOH^{®} THETA^{®} camera, for example. Camera 66 can capture a 360° view of the environment by capturing two images substantially concurrently. The two images may be captured by two ultrawide-angle lenses that are positioned to be facing in opposite directions, each camera capturing a respective field of at least 180°. In some cases, the two images that are captured can have overlapping portions that can be combined/edited, either automatically or manually. Examples of ultrawide cameras can include NIKON^{®} 8-mm f/2.8, CANON^{®} 7.5-mm f/5.6, SIGMA^{®} 15-mm f/2.8 (180° FOV), NIKON^{®} 6-mm (220° FOV), and RICOH^{®} THETA^{®} ultrawide-angle lens 2.6-mm (~204° FOV), etc. It is understood that the description herein provides some examples of the ultrawide-angle lens and auxiliary image acquisition device 66 that can be used in one or more embodiments and that in other embodiments, different lenses and/or cameras can be used. Further, it is understood that in some examples, camera 66 may be a rectilinear camera (not ultrawide).

A technical challenge with 3D measurement devices is that a laser scan of a reflective surface produces artifacts in the point cloud. For downstream usage of the point cloud, such artifacts must be removed. Present solutions to such a challenge are manually editing a scan to identify and remove every reflective surface present in the scene, a time-consuming and tedious process.

Further, a laser scanner beam that falls onto a "reflective surface" can reflect and be incident on another object in the scene. The resulting distance readout from the reflective surface point is larger than the actual distance to the surface point because of the reflection. In other examples, a "reflective surface" does not reflect the light, rather passes the incident light through without any reflection. In this case, the resulting distance readout from the reflective surface point is substantially infinite. The reflective surface, accordingly, creates phantom points in the point cloud that are placed behind the reflective surface (in relation to the scanner's position with respect to the reflective surface). Glass, mirrors, objects with metallic finishes, etc., are some examples of reflective surfaces. In some cases, values of surfaces reflectance in predetermined range of light (e.g., wavelength from 360 nm to 740 nm) can be calculated by measurements performed by a portable spectrophotometer such as KONICA^{™} Minolta CM-2500C. Based on the surface reflectance of a surface being above (equal to, or below) a predetermined threshold, the surface can be analyzed using the one or more technical solutions herein.

Technical solutions described herein facilitate the automatic removal of the reflection-induced artifacts from the point cloud. Reflective surfaces are detected in the images of the scans using machine learning, such as deep learning-based semantic segmentation. Further, the points from the point cloud corresponding to the reflective surfaces are identified and removed.

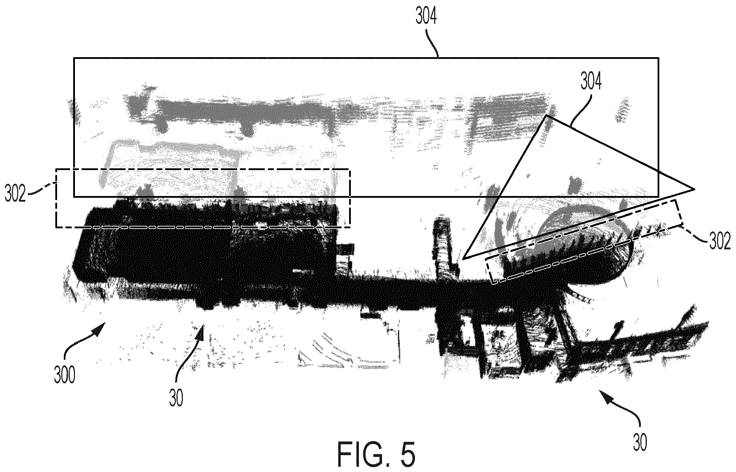

FIG. 5 depicts a point cloud captured according to one or more aspects of the technical solutions described herein. The point cloud 300 includes several scan points, each scan point representing one or more points from the surfaces in the scene (i.e., surroundings) being captured by the scanner 100. As noted herein, the scanner 100 emits one or more beams 30 that are reflected/scattered by the one or more surfaces 34 in the scene. Scanner 100 captures the reflected beams to generate the point cloud 300. It should be noted that the scanner beams 30 shown in FIG. 3 are exemplary, and that the scanner 100 can be placed at different positions in the scene to capture the point cloud 300, and in such cases, the point cloud 300 may be different from that shown in FIG. 3.

In the exemplary scenario of FIG. 5, the scene includes one or more reflective surfaces 302, for example, panels with a transparent material such as glass. As a result, the point cloud 300 includes several phantom points 304. In the example of FIG. 3, the reflective surfaces 302 are the walls of a room that is being scanned, and accordingly, in reality, there should not be any scan points behind (outside) the reflective surfaces 302 in the point cloud 300. However, as can be seen, the point cloud 300 includes several phantom points 304, which are scan points with 3D coordinates outside the actual boundaries of the scene (i.e., room) being scanned.

The more the surface area of reflective surfaces 302 in the scene, the more the phantom points 304 in the corresponding point clouds. Accordingly, scanning a building with glass exteriors, glass interiors (e.g., doors, partitions), etc., is challenging. Further yet, based on the light conditions, the reflectivity of the surfaces can change (e.g., because of tinting). Therefore, the repeatability of data captured by the scanner may be reduced.

Phantom points also are a cause of artifacts that make it problematic to use the captured point cloud 300 in several scenarios. For example, the phantom points 304 clutter the scene, making it difficult to come up with decisions based on the point cloud 300 and complicating the process of modeling. This is because the phantom structures are overlaid with existing structures, and in the end, nothing can be seen. For example, the phantom points may overlap or be coincident with structure captured by other scans. As a result, the phantom points may comingle with other points in the point cloud. It should be appreciated that this is undesirable since the phantom points may be of lower accuracy. Further, the process of point cloud registration between multiple scans is made difficult by the presence of phantom points.

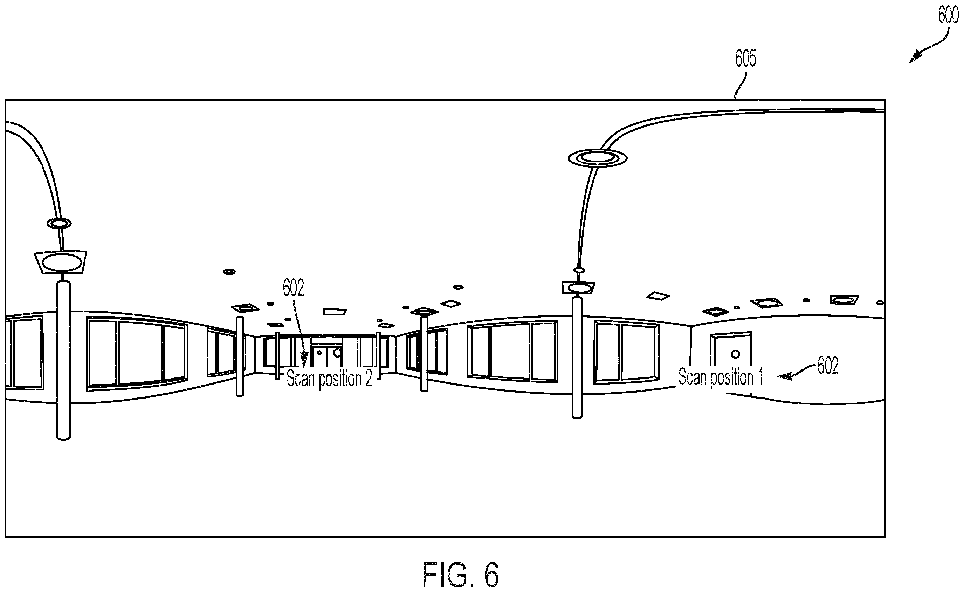

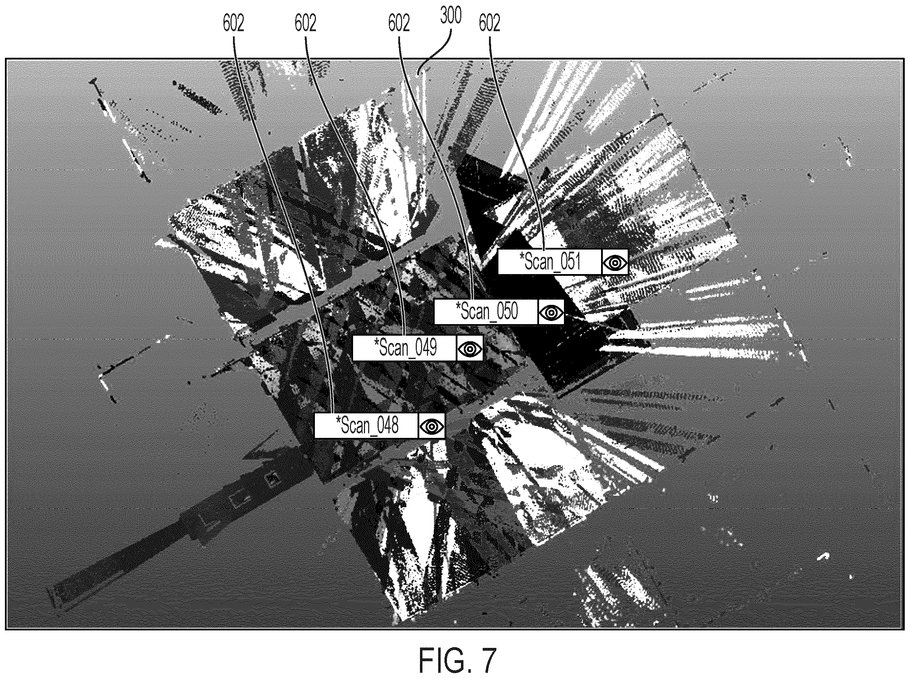

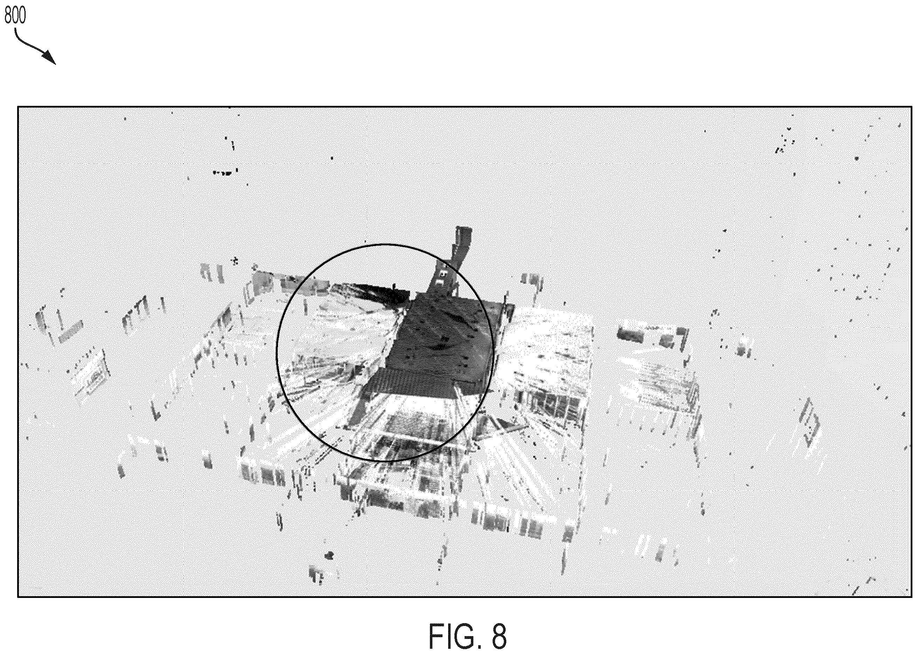

FIGS. 6, 7, 8 provide another example scenario of phantom points according to one or more aspects. Scene 600 is captured by several scans (i.e., by laser scanner 20) from one or more scan-positions 602. In FIG. 6, the scene is shown as captured in an image 605 by camera 66, in this case, a panoramic image. The several point clouds 300 that are captured from scan-positions 602, respectively, are shown in FIG. 7. FIG. 8 shows a 3D map 800 that is generated by registering the point clouds 300 and colorizing the point clouds 300 using the corresponding 2D images (not shown for the example). As can be seen, the generated 3D map 800 vividly demonstrates the technical challenges posed by reflective surfaces when scanning a scene using a scanner 100.

As noted, the existing solution to scan scenes in the presence of the reflective surfaces includes manually identifying each reflective surface 302 in individual scans. Further, the distance readouts, i.e., phantom points 304, corresponding to the reflective surface areas, are manually selected and deleted. After this manual cleanup, the user can attempt point cloud registration and other downstream tasks on the point clouds 300.

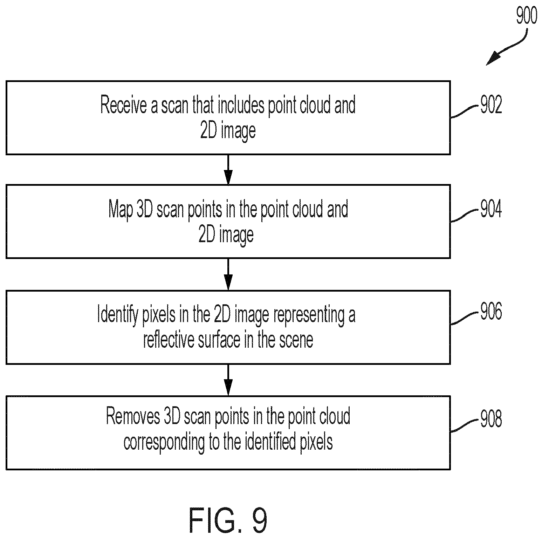

FIG. 9 depicts a flowchart of a method 900 to automatically remove the phantom points 304 corresponding to one or more reflective surfaces 302 in scene 600. Method 900 includes, at block 902, receiving a scan that includes a point cloud 300 and a corresponding 2D image 605. The point cloud 300 and the 2D image 605 are both captured by the scanner 100 from a scan-position 602 in scene 600.

At block 904, the scan points in the point cloud 300 are mapped to a pixel in the 2D image 605. The mapping can be performed using known or later developed techniques for mapping a 2D image to a 3D structure, such as texture mapping algorithms like forward texture mapping, affine texture mapping, inverse texture mapping, etc. The mapping associates a scan point from the point cloud 300 with at least a pixel from the 2D image 605. It should be noted that in some cases, a pixel can be mapped to more than one scan point. In one or more aspects, the mapping can take into consideration an offset in the positions of the lenses of the 3D scanner and camera 66 that, respectively, capture the point cloud 300 and the 2D image 605.

At block 906, the 2D image 605 is analyzed to identify one or more reflective surfaces 302 in the captured portion of scene 600. A reflective surface 302 can be identified in the 2D image 605 using machine learning in one or more aspects. In one or more aspects, identifying that a pixel in the 2D image 605 represents a reflective surface 302 from scene 600 is performed using semantic segmentation. Identifying the reflective surface 302 includes identifying every pixel in the 2D image 605 either as belonging to the reflective surface 302 or not. Deep learning with convolutional neural networks can be used to train a model to perform such semantic segmentation.

The machine learning model is trained using a database of images with pixel annotations, i.e., ground truth. Once the machine learning model (i.e., algorithm) is trained on the examples of annotated images in the database to identify reflective surfaces with at least a predetermined accuracy (e.g., 95%, 97.5%, etc.), the trained model is used to identify reflective surfaces 302 in new, unseen images.

In some aspects, the unseen images that are to be analyzed using the trained machine learning model are converted to a particular projection, such as gnomonic projection. For example, in some cases, the captured 2D image 605 may be stored in a different projection such as equirectangular projection, which can distort the objects nonlinearly. Hence, the 2D image 605 is converted to the gnomonic projection for optimal performance of the trained machine learning model. It is understood that any other type of projection can be used in one or more aspects of the present technical solutions. The trained machine learning model outputs the set of pixels in the 2D image 605 that represents a reflective surface 302 in scene 600.

At block 908, for every pixel in the identified set of pixels representing a reflective surface 302 in the 2D image 605, a 3D scan point from the point cloud 300 corresponding to the pixel is determined and removed from the point cloud 300. Processing the scan point cloud in such a manner removes the phantom points 304 in the point cloud 300 that arise due to the reflective surfaces 302.

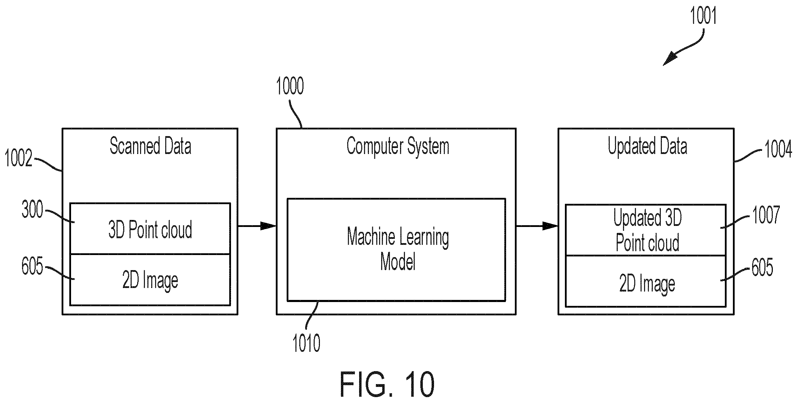

FIG. 10 depicts a block diagram of a system 1001 according to one or more aspects of the present technical solutions. In system 1001, the scanned data 1002 that is captured by scanner 100 is analyzed by a computing system 1000. The scanned data 1002 includes the one or more 3D point clouds 300 and the corresponding 2D images 605. The computing system 1000 accesses the scanned data 1002 to clean the scanned data 1002 and generate the updated data 1004. The scanned data 1002 and the updated data 1004 can be stored on the same or different storage devices.

The computing system 1000 can be remotely located from the one or more storage devices used to store the scanned data 1002 and the updated scanned data 1004. The computing system 1000 executes the machine learning model 1010 that facilitates detecting the reflective surfaces 302 in the 2D images 605. The machine learning model 1010 can be updated periodically in one or more aspects of the present technical solutions.

The updated data 1004 includes updated 3D point clouds 1007 and the corresponding 2D images 605. An updated 3D point cloud 1007 in the updated scanned data 1004 does not have the phantom points 304 that are detected and excluded from the corresponding 3D point cloud 300 by the method 900.

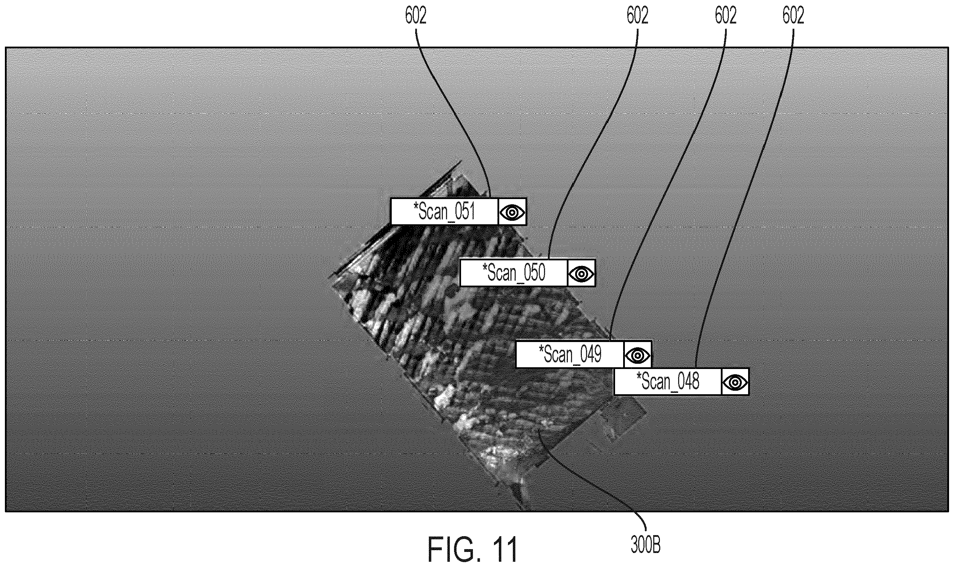

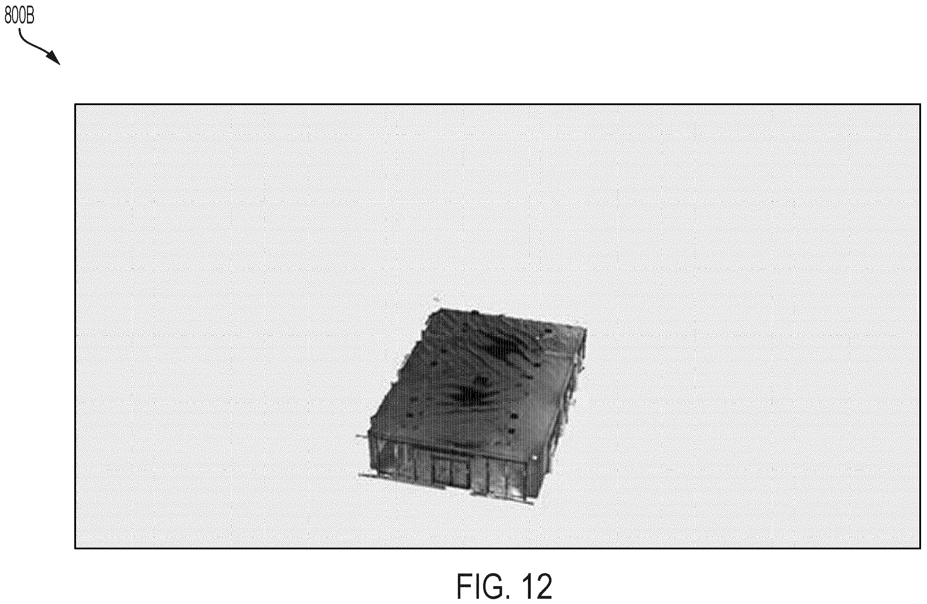

FIG. 11 and FIG. 12 depict, respectively, point clouds 300B and 3D map 800B to which the technical solutions described herein have been applied. Compared to the corresponding point clouds 300 and 3D map 800 from FIGS. 7, 8, it can be seen that the technical solutions described herein facilitate improvement to the 3D map generation and data collection processes. Further, the technical solutions described herein are integrated into a practical application to generate 3D maps of surrounding environment and automatically removing phantom points caused by reflective surfaces.

Technical solutions described herein address the technical challenge of identifying and removing reflections in 3D point clouds captured by a scanner in an automated and efficient manner, in substantially real-time. Automatic reflection removal addresses a significant bottleneck in the workflows based on laser scanning, particularly in the case of scenes with a large number (e.g., tens, hundreds, etc.) of reflective surfaces. In such cases, customers' time to decision and satisfaction with the workflows using manual identification and removal of phantom points from the point clouds is impractical, if not impossible. The technical solutions described herein significantly reduce the time required for the removal of the phantom points caused by the reflective surfaces from the point clouds. The technical solutions described herein, accordingly, provide an improvement to laser scanning and the workflows that use the scans captured by a 3D scanner. Further, the technical solutions described herein provide a practical application of cleaning 3D scans by automatically removing the phantom points based on identifying reflective surfaces in the scene using machine learning.

Terms such as processor, controller, computer, DSP, FPGA are understood in this document to mean a computing device that may be located within an instrument, distributed in multiple elements throughout an instrument, or placed external to an instrument.

While the invention has been described in detail in connection with only a limited number of embodiments, it should be readily understood that the invention is not limited to such disclosed embodiments. Rather, the invention can be modified to incorporate any number of variations, alterations, substitutions, or equivalent arrangements not heretofore described but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description but is only limited by the scope of the appended claims.

## Claims

1. A system comprising:
a three-dimensional (3D) scanner;
a camera; and
one or more processors coupled with the 3D scanner and the camera, the one or more processors configured to:
capture a frame with the 3D scanner and the camera, wherein the frame comprises a point cloud from the 3D scanner and a 2D image from the camera, the point cloud comprises a plurality of 3D scan points, a 3D scan point represents a distance of a point in a surrounding environment from the 3D scanner, and the 2D image comprises a plurality of pixels, a pixel represents a color of a point in the surrounding environment;
identify, using a machine learning model, a subset of pixels in the 2D image, the subset of pixels represents a reflective surface;
for each pixel in the subset of pixels, determine one or more corresponding 3D scan points in the point cloud; and
create an updated point cloud in the frame by removal of the one or more corresponding 3D scan points from the point cloud.

2. The system of claim 1, wherein the 2D image is an ultra-wide-angle image.

3. The system of claim 1, wherein the machine learning model comprises a neural network.

4. The system of claim 3, wherein the neural network uses semantic segmentation to identify the subset of pixels representing the reflective surface.

5. The system of claim 1, wherein the camera is an integral part of the 3D scanner.

6. The system of claim 1, wherein the camera is mounted on the 3D scanner at a predetermined position relative to the 3D scanner.

7. The system of claim 1, wherein the reflective surface is a glass panel.

8. A computer-implemented method comprising:
accessing, by a processor, a frame captured by a three-dimensional (3D) scanner and a camera, wherein the frame comprises a point cloud from the 3D scanner and a 2D image from the camera, the point cloud comprises a plurality of 3D scan points, a 3D scan point represents a distance of a point in a surrounding environment from the 3D scanner, and the 2D image comprises a plurality of pixels, a pixel represents a color of a point in the surrounding environment;
identifying, by the processor, using a machine learning model, a subset of pixels in the 2D image, the subset of pixels represents a reflective surface;
for each pixel in the subset of pixels, determining, by the processor, one or more corresponding 3D scan points in the point cloud; and
creating by the processor, an updated point cloud in the frame by removal of the one or more corresponding 3D scan points from the point cloud.

9. The computer-implemented method of claim 8, wherein the 2D image is an ultra-wide-angle image.

10. The computer-implemented method of claim 8, wherein the machine learning model comprises a neural network.

11. The computer-implemented method of claim 10, wherein the neural network uses semantic segmentation to identify the subset of pixels representing the reflective surface.

12. The computer-implemented method of claim 8, wherein the camera is an integral part of the 3D scanner.

13. The computer-implemented method of claim 8, wherein the camera is mounted on the 3D scanner at a predetermined position relative to the 3D scanner.

14. The computer-implemented method of claim 8, wherein the reflective surface is a glass panel.
